# FASCICULE DE BREVET EUROPEEN

(11) **EP 3 219 544 B1**
(45) Date de publication et mention de la délivrance du brevet: **27.11.2019**
(21) Numéro de dépôt: 17161073.6
(22) Date de dépôt: 15.03.2017
(51) Int. Cl.: B60P 3/20

(54) **PROCÉDÉ DE FONCTIONNEMENT ÉLECTRIQUE D'UN VÉHICULE DE TRANSPORT DE MARCHANDISES ET VÉHICULE DE TRANSPORT DE MARCHANDISES, NOTAMMENT FRIGORIFIQUE**
ELEKTRISCHES BETRIEBSVERFAHREN EINES WARENTRANSPORTFAHRZEUGS, UND WARENTRANSPORTFAHRZEUG, INSBESONDERE KÜHLFAHRZEUG
ELECTRIC OPERATION METHOD OF A VEHICLE FOR TRANSPORTING GOODS AND VEHICLE FOR TRANSPORTING GOODS, IN PARTICULAR REFRIGERATED

(30) Priorité: 17.03.2016 FR 1652267
(43) Date de publication de la demande: 20.09.2017
(73) Titulaire: Jean Chereau SAS, 50220 Ducey (FR)
(72) Inventeur: BUISINE, François, 35140 SAINT AUBIN DU CORMIER (FR)
(74) Mandataire: Casalonga

(56) Documents cités:
- EP-A1- 2 799 264
- FR-A1- 2 983 128
- US-A1- 2011 193 710

## Description

La présente invention concerne le domaine des véhicules de transport de marchandises, notamment le domaine des véhicules comprenant des caisses frigorifiques portées par des châssis, par exemple des camions porteurs ou des semi-remorques.

Les équipements électriques de tels véhicules sont conçus, construits et pilotés en tant qu'entités indépendantes et comprennent des appareillages (par exemple des vérins, des moteurs électriques) et/ou des capteurs (par exemple de position, de mouvement) et/ou des interfaces homme/machine (par exemple des commutateurs manuels, des claviers) et/ou des cartes électroniques.

A titre d'exemple, le brevet FR 2 983 128 décrit, en tant qu'entité indépendante, un équipement qui comprend une pluralité de ventilateurs et un circuit électronique de gestion qui permet de faire varier le fonctionnement de la pluralité de ventilateurs en fonction la différence entre des signaux de températures, afin de générer un rideau d'air contrôlé sous l'effet des ventilateurs qui fonctionnent tous en même temps.

A titre d'autre exemple, le brevet EP 2 799 264 décrit, également en tant qu'entité indépendante, une machine frigorifique et des moyens de traitements de données de températures, aptes à faire varier le fonctionnement de la machine frigorifique.

Le but de la présente invention est de proposer un perfectionnement au fonctionnement et à l'alimentation électrique des équipements électriques des véhicules de transport de marchandises.

Selon un mode de réalisation, il est proposé un procédé de fonctionnement électrique d'un véhicule de transport de marchandises, notamment d'un véhicule frigorifique ; ce véhicule étant équipé d'une pluralité d'équipements électriques, d'une pluralité de contacts électriques dont au moins certains commandent ou détectent des états de fonctionnement respectivement d'au moins certains desdits équipements électriques et qui sont aptes à délivrer des signaux d'activation, et d'un système d'alimentation en énergie électrique desdits équipements électriques comprenant au moins une source commune d'alimentation en énergie électrique et un moyen commun de commutation apte à occuper une position fermée pour relier la source commune d'alimentation auxdits équipements électriques et une position ouverte pour couper l'alimentation électrique desdits équipements électriques ; le procédé comprenant : commander ledit moyen de commutation en fonction d'au moins certains desdits signaux d'activation, en délivrant un signal de commande de fermeture dudit moyen commun de commutation sous l'effet de l'un quelconque desdits signaux d'activation et en délivrant un signal de commande d'ouverture dudit moyen commun de commutation lorsque l'ensemble desdits signaux d'activation est absent.

Ainsi, il est possible de faire une supervision du fonctionnement des équipements et, quand l'alimentation électrique générale, issue de la source commune d'énergie électrique apte à alimenter individuellement des équipements électriques, est coupée, il est possible de faire des économies d'énergie.

Au moins un signal d'activation est délivré à la suite d'un délai de temporisation.

Il est également proposé un véhicule de transport de marchandises, notamment un véhicule frigorifique, équipé d'une pluralité d'équipements électriques, d'une pluralité de contacts électriques dont au moins certains commandent ou détectent des états de fonctionnement respectivement d'au moins certains desdits équipements électriques et qui sont aptes à délivrer des signaux d'activation, et d'un système d'alimentation en énergie électrique desdits équipements électriques.

Le système d'alimentation comprend au moins une source commune d'alimentation en énergie électrique et un dispositif électronique de gestion pourvu d'un moyen commun de commutation apte à occuper une position fermée pour relier la source commune d'alimentation auxdits équipements électriques et une position ouverte pour couper l'alimentation électrique desdits équipements électriques et pourvu d'un circuit électronique soumis auxdits signaux d'activation et apte à commander ledit moyen commun de commutation en fonction d'au moins certains desdits signaux d'activation, en délivrant un signal de commande de fermeture dudit moyen commun de commutation sous l'effet de l'un quelconque desdits signaux d'activation et en délivrant un signal de commande d'ouverture dudit moyen commun de commutation lorsque l'ensemble desdits signaux d'activation est absent.

Ledit circuit électronique peut comprendre une porte logique OU dont les entrées reçoivent lesdits signaux d'activation et dont la sortie est reliée audit moyen commun de commutation.

Le véhicule peut comprendre un compartiment frigorifique.

Le véhicule peut comprendre un tracteur et une remorque attelée au tracteur, dans lequel lesdits équipements alimentés via ledit moyen commun de commutation sont portés par la remorque.

Ladite source d'énergie électrique est portée par la remorque ou par le tracteur.

Un véhicule de transport de marchandises pourvu d'équipements va maintenant être décrit à titre d'exemple non limitatif et illustré par le dessin annexé dans lequel :
- la figure 1 représente, en perspective, un véhicule de transport de marchandises pourvu d'équipements; et
- la figure 2 représente un schéma électronique d'un système d'alimentation en énergie électrique des équipements électriques.

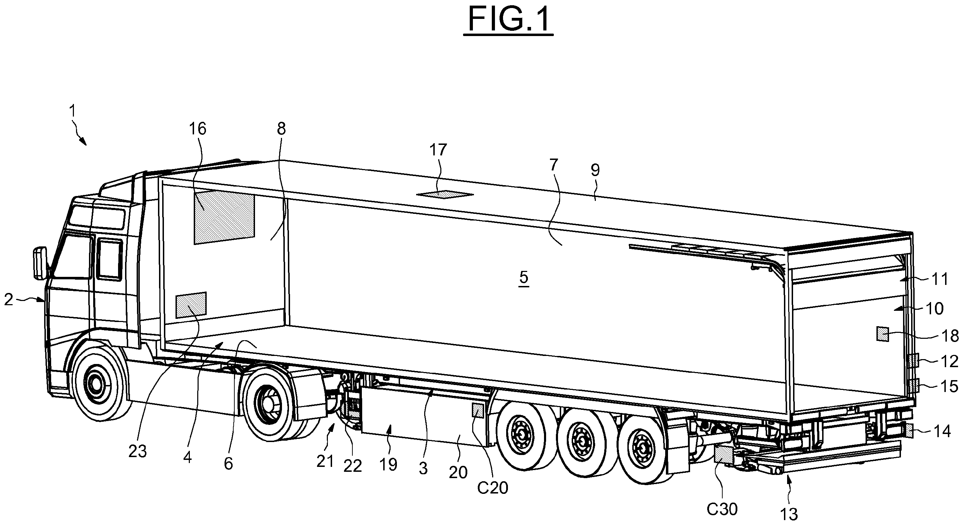

Sur la figure 1, est illustré un véhicule 1 de transport de marchandises, en particulier un porteur ou un camion à semi-remorque, qui comprend, en arrière d'une cabine avant de pilotage 2 et sur un châssis 3, une structure 4 qui comprend, en vue de délimiter un compartiment parallélépipédique de chargement 5, un plancher horizontal 6, des flancs latéraux verticaux longitudinaux 7, une paroi transversale avant verticale 8 et un pavillon horizontal 9 qui relie les bords supérieurs des flancs longitudinaux 7 et de la paroi transversale avant 8 et qui forme le toit du compartiment 5, de sorte que le compartiment 5 présente une ouverture d'accès arrière 10.

Le compartiment 4 est équipé, à l'arrière, d'un rideau coulissant 11 adapté pour fermer/ouvrir l'ouverture d'accès arrière 10. Le rideau coulissant 11 est pourvu d'un moteur électrique d'entraînement (non représenté). Pour activer ce moteur électrique, via une carte électronique propre adaptée (non représentée), en vue de déplacer le rideau coulissant 11 dans un sens ou dans l'autre, un utilisateur a à sa disposition des boutons de commande électrique 12 placés à l'arrière de l'un des flancs 7 et à l'extérieur.

Le châssis 3 est équipé, à l'arrière, d'un hayon élévateur 13 pour monter/descendre des charges en regard de l'ouverture d'accès arrière 10, ce hayon 13 présentant une position de rangement au-dessous de la partie arrière du plancher 6. Le hayon élévateur 13 est pourvu de moyens d'actionnement (non représentés) de son plateau, tels que des moteurs électriques et/ou des vérins. Pour activer ces moyens d'actionnement, via une carte électronique propre ou un coffret électrique propre adapté (non représenté), un utilisateur a à sa disposition un organe électrique 14 à clé de contact, pour autoriser l'alimentation électrique, et des boutons de commande électrique 15, placés à l'arrière de l'un des flancs 7 et à l'extérieur.

En avant de la paroi transversale avant 7, la structure 4 est équipée d'un groupe frigorifique 16 apte à générer du froid dans le compartiment 4 et qui présente sa propre carte électronique de gestion de son fonctionnement.

Le pavillon 8 est équipé d'un plafonnier électrique 17 pour l'éclairage du compartiment 5. Pour activer/désactiver ce plafonnier électrique 16, un utilisateur a à sa disposition un bouton électrique 18.

D'un côté latéral et au-dessous du plancher 6, le châssis 3 est équipé d'un casier de rangement 19 pourvu d'une porte latérale 20.

Le châssis 3 et la structure 4 qu'il porte peuvent être pourvus de nombreux autres équipements électriques commandés, à alimentation électrique directe ou à alimentation électrique par l'intermédiaire de cartes électroniques propres.

A l'exception du groupe frigorifique 16 qui nécessite plus d'énergie électrique et qui est relié à une source principale d'énergie électrique associée au moteur du véhicule, les équipements électriques équipant le châssis 3 et la structure 4 sont sélectivement reliés à un système d'alimentation en énergie électrique 21.

Le système d'alimentation 21 comprend une source autonome d'énergie électrique secondaire 22 (une batterie), par exemple portée par le châssis 3 et un dispositif électronique de gestion 23 (un ordinateur), par exemple installé sur la structure 4 dans le voisinage de la paroi transversale 8, pour gérer sélectivement l'alimentation électrique d'au moins certains des équipements électriques.

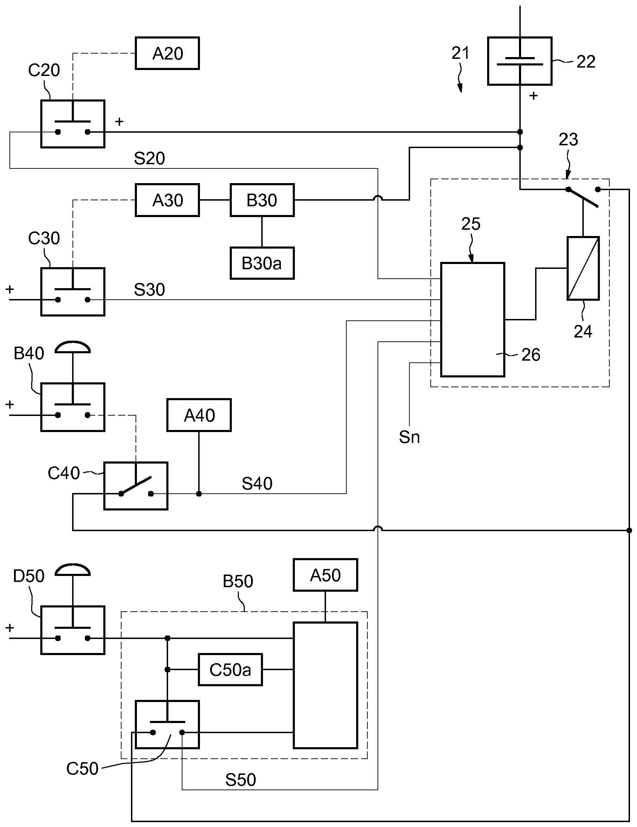

En se reportant à la figure 2, on va maintenant décrire un exemple de réalisation du système d'alimentation 21 et un mode de fonctionnement de ce dernier.

Le dispositif électronique de gestion 23 du système d'alimentation 21 comprend un commutateur électrique commun 24 et un circuit électronique 25 incluant une porte logique OU 26 dont une sortie de commande est reliée à une entrée de commande du commutateur électrique commun 24.

Le commutateur électrique commun 24 est interposé entre la source d'énergie électrique 22 et certains des équipements du véhicule pour établir/couper l'alimentation électrique de ces derniers.

En fonction de l'état logique de la sortie de la porte logique OU 26, le commutateur électrique commun 24 est placé soit à l'état « fermé » soit à l'état « ouvert ».

Des entrées de la porte logique OU 26 sont soumises à des signaux d'activation issus de contacts électriques spécifiques de certains des équipements du véhicule.

Lorsqu'au moins l'une des entrées de la porte logique OU 26 sont à l'état logique « 1 », la sortie de la porte OU est à l'état logique « 1 » et le commutateur électrique commun 24 est placé et maintenu à l'état « fermé ».

Lorsque toutes les entrées de la porte logique OU 26 sont à l'état logique « 0 », la sortie de la porte OU est à l'état logique « 0 » et le commutateur électrique commun 24 est placé et maintenu à l'état « ouvert ».

Les équipements du véhicule peuvent être classés en plusieurs catégories différentes suivantes et le dispositif électronique de gestion 23 du système d'alimentation 21 peut fonctionner en conséquence de la manière suivante.

Le véhicule peut comporter au moins un équipement A20 qui n'est pas alimenté en énergie électrique. Cet équipement A20 est muni d'un contact électrique C20 qui est directement interposé entre la source d'énergie électrique 22 et une entrée de la porte OU 26. Lorsque cet équipement A20 est dans un état prédéterminé ou une position déterminée, le contact électrique C20 est à l'état « fermé » et délivre un signal d'activation S20 (un « 1 » logique) à l'entrée correspondante de la porte logique OU 26.

Par exemple, l'équipement A20 peut être formé par la porte 20 du casier de rangement 19 et équipé d'un contact électrique C20. Lorsque la porte 20 est ouverte, le contact électrique C20 est à l'état « fermé » et l'entrée correspondante de la porte OU 26 est à l'état logique « 1 ». Selon un autre exemple, le contact électrique C20 peut être associé à des portes battantes de fermeture de l'ouverture d'accès arrière 10 du véhicule 1, en remplacement du rideau coulissant 11.

Le véhicule peut comporter au moins un équipement A30 qui peut être alimenté en énergie électrique directement depuis la batterie, par l'intermédiaire d'une unité électronique propre B30 et de moyens propres de commande B30a de cette unité électronique B30.

L'équipement A30 est muni d'un contact électrique C30 qui est interposé entre la source d'énergie électrique 22 et une entrée de la porte OU 26. Lorsque l'équipement A30 est dans un état prédéterminé ou une position déterminée, le contact électrique C30 est à l'état « fermé » et délivre un signal d'activation S30 (un « 1 » logique) à l'entrée correspondante de la porte logique OU 26.

Par exemple, l'équipement A30 est constitué par le hayon élévateur 13 et un contact électrique C30 est sollicité lorsque ce hayon est à sa position de rangement.

L'unité électronique B30 comprend une carte électronique de pilotage des moyens d'actionnement de son plateau et comprend l'organe électrique 14 à clé de contact, interposé entre la source d'énergie électrique 22 et cette carte électronique. Les moyens propres de commande B30a sont formés par le ou les boutons de commande électrique 15 et/ou une télécommande.

Lorsque le hayon élévateur 13 est à sa position de rangement, le contact électrique C30 est à l'état « ouvert ». Par contre, lorsque le hayon élévateur 13 n'est pas à sa position de rangement, le contact électrique C30 est à l'état « fermé » et délivre un signal d'activation S30 à l'entrée correspondante de la porte logique OU 26.

Le véhicule peut comporter au moins un équipement A40 qui est alimenté en énergie électrique indirectement via le commutateur électrique commun 24 et qui fonctionne par exemple en tout-ou-rien. Cet équipement A40 est muni d'un contact électrique C40, par exemple un relais électrique, interposé entre le commutateur commun 24 et l'équipement A40.

Le contact électrique C40 est soumis à un bouton poussoir B40 interposé entre la source d'énergie électrique 22 et le contact électrique C40 et actionnable par un utilisateur. A une impulsion issue du bouton poussoir B40 et induite par l'utilisateur, le contact électrique C40 est placé à l'état « fermé » et l'équipement A40 est alimenté en énergie électrique via le commutateur électrique commun 24 et ce contact électrique C40. A une impulsion suivante issue du bouton poussoir B40 et induite par l'utilisateur, le contact électrique C40 est placé à l'état « ouvert » et l'alimentation électrique de l'équipement A40 est coupée.

Le contact électrique C40 est relié à une entrée de la porte OU 26 pour délivrer un signal d'activation S40 (un « 1 » logique) à cette entrée lorsqu'il est à l'état « fermé ».

Par exemple, l'équipement A40 est constitué par le plafonnier d'éclairage 17 et le bouton poussoir B40 est formé par le bouton électrique 18, auquel est associé un contact électrique C40, par exemple un relais électrique bistable. Lorsque le plafonnier 17 est alimenté depuis la source d'énergie électrique 22 via le commutateur commun 24 et le contact électrique C40 commandé par le bouton électrique 18, le contact électrique C40 délivre un signal d'activation S40 (un état logique « 1 ») à l'entrée correspondante de la porte OU 26. Selon un autre exemple, l'équipement A40 peut être constitué par tout autre moyen d'éclairage monté sur la remorque du véhicule 1.

Le véhicule peut comporter au moins un équipement A50 qui est soumis à une unité électronique programmée propre B50 de contrôle de son fonctionnement qui peut être alimentée en énergie électrique depuis la source d'énergie électrique 22, indirectement via le commutateur électrique commun 24. L'unité électronique de contrôle B50 est soumise à un ou plusieurs boutons de commande D50 actionnables par un utilisateur afin de contrôler le fonctionnement de l'équipement A50 et qui sont interposés entre la source d'énergie électrique 22 et l'unité électronique de contrôle B50.

L'unité électronique de contrôle B50 est pourvue d'un contact électrique intégré d'entrée C50, par exemple un transistor de commutation. Dès qu'un bouton de commande D50 est sollicité par un utilisateur, une impulsion électrique est délivrée au contact électrique C50 et ce dernier est placé à l'état « fermé ». L'unité électronique de contrôle B50 est alors alimentée en énergie électrique via le commutateur commun 24. L'utilisateur peut alors commander l'équipement A50 au travers de l'unité électronique B50.

L'unité électronique de contrôle B50 est pourvue d'une temporisation C50a d'auto-maintien. Si le ou les boutons de commande D50 ne sont pas sollicités pendant un délai prédéterminé de temporisation dt fixé par la temporisation C50a, depuis une dernière sollicitation, le contact électrique C50 est placé à l'état « ouvert ». L'alimentation électrique de l'unité électronique de contrôle B50 est coupée.

Le contact électrique intégré d'entrée C50 est relié à une entrée de la porte logique OU 26. Lorsque ce contact électrique C50 est à l'état « fermé », un signal d'activation S50 (un « 1 » logique) est délivré à l'entrée correspondante de la porte logique OU 26.

Par exemple, l'équipement A50 est constitué par le rideau 11 de fermeture du compartiment 5 du véhicule, pourvu d'une unité ou carte électronique programmée de pilotage B50 incluant un contact électrique C50. Le ou les boutons de commande D50 sont constitués par le ou les boutons électriques 12, reliés à cette carte électronique.

Conformément à ce qui est décrit ci-dessus, lorsque l'un de ces boutons électriques 12 est sollicité par un utilisateur pour commander un mouvement du rideau de fermeture 11, cette sollicitation induit la mise à l'état « fermé » du contact électrique C50 et en conséquence l'alimentation électrique de l'unité électronique de pilotage B50 pour la commande et l'alimentation électrique des moyens d'entraînement du rideau de fermeture 11 via cette unité électronique de pilotage B50, par l'intermédiaire du ou des boutons électriques 12.

Si aucun des boutons électriques 12 n'est sollicité pendant un délai de temporisation dt suivant une dernière sollicitation, programmé grâce à la temporisation C50a, le contact électrique C50 est placé à sa position « ouverte ». L'alimentation électrique de l'unité ou carte électronique programmée de pilotage B50 est alors coupée.

Le véhicule peut comporter d'autres équipements, alimentés en énergie électrique par une autre source que la source d'énergie électrique 22 et aptes, optionnellement, à délivrer des signaux d'activation Sn (un « 1 » logique) à des entrées de la porte OU 26. De tels signaux d'activation Sn peuvent être générés par des moyens indiquant, notamment, que le groupe frigorifique 16 est en marche, que le moteur du véhicule est en marche, que la remorque pourvue du compartiment 5 est accrochée au tracteur, que le véhicule est à l'arrêt, qu'un éclairage est allumé depuis le tracteur, que les moyens de relevage d'un essieu de la remorque du véhicule sont activés.

Dans les cas décrits ci-dessus à titre d'exemples, lorsqu'au moins l'un quelconque des signaux d'activation (un « 1 » logique) S20, S30, S40, S50 ou éventuellement Sn est présent à l'entrée de la porte OU 26, la sortie de cette porte OU est à l'état de « commande » (un « 1 » logique) le commutateur électrique commun 24 est à l'état « fermé ». Alors, les moyens électriques des équipements électriques reliés au commutateur électrique commun 24 sont reliés à la source d'énergie électrique 22 via ce commutateur électrique commun 24, comme il a été décrit précédemment.

Par contre, lorsque l'ensemble des signaux d'activation S20, S30, S40, S50 et éventuellement Sn est absent (c'est-à-dire tous les signaux d'activation S20, S30, S40, S50 sont absentes : toutes les entrées de la porte OU 26 sont à l'état logique « 0 »), la sortie de la porte OU 26 est à l'état logique « 0 ». Le commutateur électrique commun 24 est à l'état « ouvert ». Les moyens électriques des équipements électriques reliés au commutateur électrique commun 24 ne sont pas reliés à la source d'énergie électrique 22 et ne consomment pas d'énergie électrique.

Le dispositif électronique de gestion 23, incluant le commutateur électrique commun 24, la porte logique OU 26, et une pluralité de contacts électriques (C20-C50) délivrant des signaux d'activation à la porte OU 26, constituent un système électronique de supervision des états du fonctionnement d'équipements sélectionnés, électriques ou non électriques, du véhicule (A20-A50 et autres) et de gestion de l'alimentation électrique des équipements électriques sélectionnés ou de certains de ces équipements électriques sélectionnés (A30-A50) depuis la source secondaire d'énergie électrique 22 et via le commutateur électrique commun 24.

Dans le cas où le véhicule comprend un tracteur et une remorque apte à être attelée au tracteur, la source d'énergie électrique secondaire 22, le système de gestion d'alimentation 21 et les équipements alimentés via le commutateur commun 24 sont portés par la remorque. Néanmoins, la source d'énergie électrique secondaire 22 pourrait être source d'énergie électrique portée par le tracteur du véhicule.

## Revendications

1. Procédé de fonctionnement électrique d'un véhicule de transport de marchandises, notamment véhicule frigorifique, ce véhicule étant équipé
- d'une pluralité d'équipements électriques (A30, A40, A50),
- d'une pluralité de contacts électriques (C20, C30, C40, C50) dont au moins certains commandent ou détectent des états de fonctionnement respectivement d'au moins certains desdits équipements électriques et qui sont aptes à délivrer des signaux d'activation (S20, S30, S40, S50),
- et d'un système d'alimentation en énergie électrique desdits équipements électriques, comprenant au moins une source commune d'alimentation en énergie électrique (22) et un moyen commun de commutation (24) apte à occuper une position fermée pour relier la source commune d'alimentation auxdits équipements électriques et une position ouverte pour couper l'alimentation électrique desdits équipements électriques ;
procédé comprenant : commander ledit moyen de commutation (24) en fonction d'au moins certains desdits signaux d'activation (S20, S30, S40, S50) en délivrant un signal de commande de fermeture dudit moyen commun de commutation (24) sous l'effet de l'un quelconque desdits signaux d'activation (S20, S30, S40, S50) et en délivrant un signal de commande d'ouverture dudit moyen commun de commutation (24) lorsque l'ensemble desdits signaux d'activation est absent.

2. Procédé selon la revendication 1, dans lequel au moins un signal d'activation est délivré à la suite d'un délai de temporisation (dt).

3. Véhicule de transport de marchandises, notamment véhicule frigorifique, équipé
- d'une pluralité d'équipements électriques (A30, A40, A50),
- d'une pluralité de contacts électriques (C20, C30, C40, C50) dont au moins certains commandent ou détectent des états de fonctionnement respectivement d'au moins certains desdits équipements électriques et qui sont aptes à délivrer des signaux d'activation (S20, S30, S40, S50),
- et d'un système d'alimentation en énergie électrique desdits équipements électriques, ce système comprenant au moins une source commune d'alimentation en énergie électrique (22) et un dispositif électronique de gestion pourvu d'un moyen commun de commutation (24) apte à occuper une position fermée pour relier la source commune d'alimentation auxdits équipements électriques et une position ouverte pour couper l'alimentation électrique desdits équipements électriques et pourvu d'un circuit électronique (25) soumis auxdits signaux d'activation et apte à commander ledit moyen commun de commutation en fonction d'au moins certains desdits signaux d'activation, en délivrant un signal de commande de fermeture dudit moyen commun de commutation (24) sous l'effet de l'un quelconque desdits signaux d'activation (S20, S30, S40, S50) et en délivrant un signal de commande d'ouverture dudit moyen commun de commutation (24) lorsque l'ensemble desdits signaux d'activation est absent.

4. Véhicule selon la revendication 3, dans lequel ledit circuit électronique comprend une porte logique OU (26) dont les entrées reçoivent lesdits signaux d'activation et dont la sortie est reliée audit moyen commun de commutation.

5. Véhicule selon l'une des revendications 3 et 4, comprenant un compartiment frigorifique.

6. Véhicule selon l'une quelconque des revendications 3 à 5, comprenant un tracteur et une remorque attelée au tracteur, dans lequel lesdits équipements alimentés via ledit moyen commun de commutation sont portés par la remorque.

7. Véhicule selon la revendication 6, dans lequel ladite source d'énergie électrique est portée par la remorque ou par le tracteur.

## Patentansprüche

1. Verfahren zum elektrischen Betrieb eines Warentransportfahrzeugs, insbesondere eines Kühlfahrzeugs, wobei dieses Fahrzeug ausgestattet ist
- mit mehreren elektrischen Einrichtungen (A30, A40, A50),
- mit mehreren elektrischen Kontakten (C20, C30, C40, C50), von denen wenigstens einige Betriebszustände jeweils wenigstens einiger der elektrischen Einrichtungen steuern oder erkennen und welche in der Lage sind, Aktivierungssignale (S20, S30, S40, S50) zu liefern,
- und mit einem System zur Versorgung der elektrischen Einrichtungen mit elektrischer Energie, welches wenigstens eine gemeinsame Quelle zur Versorgung mit elektrischer Energie (22) und ein gemeinsames Umschaltmittel (24) umfasst, das in der Lage ist, eine geschlossene Position, um die gemeinsame Stromversorgungsquelle mit den elektrischen Einrichtungen zu verbinden, und eine offene Position, um die Stromversorgung der elektrischen Einrichtungen zu unterbrechen, einzunehmen;
wobei das Verfahren umfasst: Steuern des Umschaltmittels (24) in Abhängigkeit von wenigstens einigen der Aktivierungssignale (S20, S30, S40, S50), indem unter der Einwirkung eines beliebigen der Aktivierungssignale (S20, S30, S40, S50) ein Signal zur Steuerung des Schließens des gemeinsamen Umschaltmittels (24) geliefert wird und indem ein Signal zur Steuerung des Öffnens des gemeinsamen Umschaltmittels (24) geliefert wird, wenn die Gesamtheit der Aktivierungssignale nicht vorhanden ist.

2. Verfahren nach Anspruch 1, wobei im Anschluss an eine Verzögerungszeit (dt) wenigstens ein Aktivierungssignal geliefert wird.

3. Warentransportfahrzeug, insbesondere Kühlfahrzeug, welches ausgestattet ist
- mit mehreren elektrischen Einrichtungen (A30, A40, A50),
- mit mehreren elektrischen Kontakten (C20, C30, C40, C50), von denen wenigstens einige Betriebszustände jeweils wenigstens einiger der elektrischen Einrichtungen steuern oder erkennen und welche in der Lage sind, Aktivierungssignale (S20, S30, S40, S50) zu liefern,
- und mit einem System zur Versorgung der elektrischen Einrichtungen mit elektrischer Energie, wobei dieses System wenigstens eine gemeinsame Quelle zur Versorgung mit elektrischer Energie (22) und eine elektronische Managementvorrichtung umfasst, die mit einem gemeinsamen Umschaltmittel (24) versehen ist, das in der Lage ist, eine geschlossene Position, um die gemeinsame Stromersorgungsquelle mit den elektrischen Einrichtungen zu verbinden, und eine offene Position, um die Stromversorgung der elektrischen Einrichtungen zu unterbrechen, einzunehmen, und mit einer elektronischen Schaltung (25) versehen ist, an welche die Aktivierungssignale angelegt werden und die in der Lage ist, das gemeinsame Umschaltmittel in Abhängigkeit von wenigstens einigen der Aktivierungssignale zu steuern, indem sie unter der Einwirkung eines beliebigen der Aktivierungssignale (S20, S30, S40, S50) ein Signal zur Steuerung des Schließens des gemeinsamen Umschaltmittels (24) liefert und indem sie ein Signal zur Steuerung des Öffnens des gemeinsamen Umschaltmittels (24) liefert, wenn die Gesamtheit der Aktivierungssignale nicht vorhanden ist.

4. Fahrzeug nach Anspruch 3, wobei die elektronische Schaltung ein ODER-Gatter (26) umfasst, dessen Eingänge die Aktivierungssignale empfangen und dessen Ausgang mit dem gemeinsamen Umschaltmittel verbunden ist.

5. Fahrzeug nach einem der Ansprüche 3 und 4, welches ein Kühlabteil umfasst.

6. Fahrzeug nach einem der Ansprüche 3 bis 5, welches ein Zugfahrzeug und einen an das Zugfahrzeug angekuppelten Anhänger umfasst, wobei die über das gemeinsame Umschaltmittel versorgten Einrichtungen von dem Anhänger getragen werden.

7. Fahrzeug nach Anspruch 6, wobei die elektrische Energiequelle von dem Anhänger oder von dem Zugfahrzeug getragen wird.

## Claims

1. Electrical operating method for a vehicle for transporting goods, in particular a refrigerated vehicle, said vehicle being fitted
- with a plurality of items of electrical equipment (A30, A40, A50),
- with a plurality of electrical contacts (C20, C30, C40, C50), at least some of which control or detect operating states, respectively, of at least some of said items of electrical equipment and which are capable of delivering activation signals (S20, S30, S40, S50),
- and with a system for supplying electrical power to said items of electrical equipment, comprising at least one common electrical power source (22) and a common switching means (24) that is capable of occupying a closed position for connecting the common power source to said items of electrical equipment and an open position for cutting the supply of electrical power to said items of electrical equipment;
said method comprising: controlling said switching means (24) on the basis of at least some of said activation signals (S20, S30, S40, S50) by delivering a control signal to close said common switching means (24) in response to any one of said activation signals (S20, S30, S40, S50) and by delivering a control signal to open said common switching means (24) in the absence of any of said activation signals.

2. Method according to Claim 1, wherein at least one activation signal is delivered following a time delay (dt).

3. Vehicle for transporting goods, in particular a refrigerated vehicle, fitted
- with a plurality of items of electrical equipment (A30, A40, A50),
- with a plurality of electrical contacts (C20, C30, C40, C50), at least some of which control or detect operating states, respectively, of at least some of said items of electrical equipment and which are capable of delivering activation signals (S20, S30, S40, S50),
- and with a system for supplying electrical power to said items of electrical equipment, said system comprising at least one common electrical power source (22) and an electronic management device that is provided with a common switching means (24) that is capable of occupying a closed position for connecting the common power source to said items of electrical equipment and an open position for cutting the supply of electrical power to said items of electrical equipment, and provided with an electronic circuit (25) controlled by said activation signals and capable of controlling said common switching means on the basis of at least some of said activation signals, by delivering a control signal to close said common switching means (24) in response to any one of said activation signals (S20, S30, S40, S50) and by delivering a control signal to open said common switching means (24) in the absence of any of said activation signals.

4. Vehicle according to Claim 3, wherein said electronic circuit comprises an OR logic gate (26), the inputs of which receive said activation signals and the output of which is linked to said common switching means.

5. Vehicle according to either of Claims 3 and 4, comprising a refrigerated compartment.

6. Vehicle according to any one of Claims 3 to 5, comprising a tractor unit and a trailer hitched to the tractor unit, wherein said items of equipment supplied with power via said common switching means are borne by the trailer.

7. Vehicle according to Claim 6, wherein said electrical power source is borne by the trailer or by the tractor unit.
